# EUROPEAN PATENT APPLICATION

(11) **EP 1 895 802 A1**
(43) Date of publication of application: **05.03.2008**
(21) Application number: 06425601.9
(22) Date of filing: 30.08.2006
(51) Int. Cl.: H04Q 7/38, H04Q 7/30

(54) **Method and system for radio resource management in communication networks, related network and computer program product**

(71) Applicant: Nokia Siemens Networks GmbH & Co. KG, 81541 München (DE)
(72) Inventor: Masseroni, Carlo, 20017 Rho (MI) (IT); Parolari, Sergio, 20133 Milano (IT); Trivisonno, Riccardo, 20146 Milano (IT)

(57) **Abstract**

A method is described for managing radio resources in communication networks (16, 18) including equipment (10, 12) configured for transferring user plane data over radio links in the network (16, 18). The equipment (10, 12) is configured for transmitting radio link control signals including a signalling flag (UDT) indicative of whether the equipment (10, 12) is sending user plane data over a link in the network. Radio resources are thus allocated asymmetrically in the directions from and towards said equipment (10, 12), respectively. A preferred field of application is half duplex Packet Switch (PS) services, such as PoC (Push to Talk Over Cellular) and VoIP (Voice over IP) over GERAN/UTRAN networks.

## Description

### Field of the invention

The invention relates to techniques for radio resource management in communication networks, and was developed with specific attention paid to its possible use in the radio resource handling of half duplex Packet Switch (PS) services.

Exemplary of such services are PoC (Push to Talk Over Cellular) and VoIP (Voice over IP) in GERAN/UTRAN networks.

### Description of the related art

When a half duplex PS service needs to be established in a GERAN/UTRAN network, the entity that manages the radio resources (i.e. the BSC/RNC) is informed before the PS call set-up only as to the maximum guaranteed bit rate requirement in the two directions; no information is provided as to the direction in which user plane data are transmitted at any time.

This lack of information leads to an inefficiency in radio resource utilization: the network is required to maintain at any time radio resources allocated in both directions, even if these are in fact needed only in one direction at a time.

In current arrangements, a GERAN/UTRAN network can only implicitly infer that in a half duplex PS service data transfer is currently taking place in one direction, rather than in the other, by measuring and comparing the throughput in the two directions.

This is a difficult task because - even if user plane data transfer is taking place in one direction only - some user signalling may be ongoing in the other direction, thereby affecting the throughput calculation in that direction. Furthermore, any detection process based on throughput measurements inevitably involves some delays in achieving accurate results.

The foregoing renders the task of identifying in a fast and reliable manner the direction of data transfer rather complicated. Consequently, dynamic handling of radio resources in the scenario depicted is not practically feasible.

### Object and summary of the invention

The object of the invention is thus to facilitate handling of radio resources in communication networks such as GERAN/UTRAN networks, by making it possible e.g. for entities that manage the radio resources (i.e. the BSC/RNC) to identify in a fast and reliable manner the direction of data transfer, especially in the case of half-duplex PS services.

According to the present invention, that object is achieved by means of a method having the features set forth in the claims that follow. The invention also relates to a corresponding system, a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred embodiment of the arrangement described herein is based on the concept of introducing in all the RLC (Radio Link Control) data blocks sent in the uplink direction (from the MS/UE towards the network) a signalling flag (UDT, User Data Transfer) indicating whether or not the mobile station is actually sending user plane data (thus indicating that data transfer is taking place from the mobile station towards the network on the radio link involved or that no user plane data, but e.g. only user signalling is being sent.

In this case the network is immediately able to detect the direction where data transfer is ongoing, and therefore take proper actions. Being able to detect the direction of data transfer, the network may decide to reorganize radio resources accordingly, with the possibility of granting more bandwidth in the data transfer direction, while providing in the other direction only a minimal bandwidth to allow e.g. transmission of signalling information. This option is particularly useful in GERAN networks where mobile stations often cannot support heavy resource allocations (i.e. in terms of assigned radio timeslots) in both directions at the same time, and need to toggle between uplink-biased and downlink-biased configurations. This opportunity can be fully exploited in the case of the arrangement described herein, where the network is able to detect the direction in which data transfer is taking place and consequently decide the corresponding resource allocation, i.e. decide which of the two biased configurations to use.

The setting of the UDT signalling flag in the uplink RLC data blocks may also require cross-layer communications between the application layer and the RLC layer within the mobile stations.

### Brief description of the annexed representations

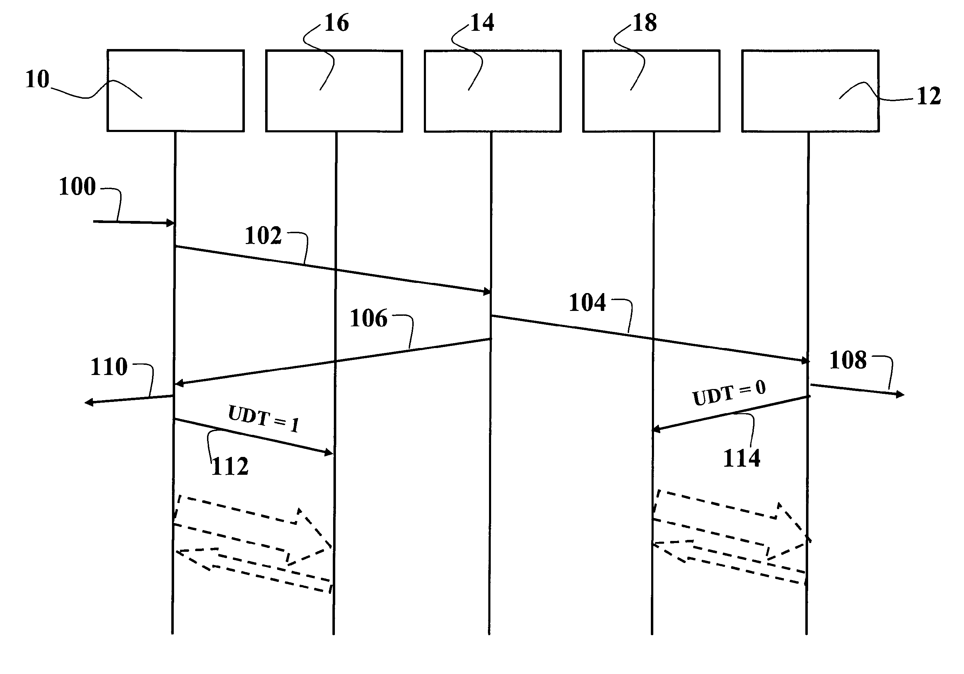

The invention will now be described, by way of example only, with reference to the enclosed figure of drawing, showing a chart exemplary of operation of the arrangement described herein in the - exemplary - case of a PoC (Push to Talk Over Cellular) service.

### Detailed description of preferred embodiments of the invention

More in detail, the chart of the figure is representative of the sequence of messages exchanged in providing a PoC (Push to Talk Over Cellular) service involving two User Equipments (UE's) 10 and 12 that interact with a PoC server 14 via respective Radio Access Networks (RAN's) 16, 18 such as GERAN/UTRAN networks.

Reference numeral 100 generally denotes the act of one of the User Equipments (e.g. UE 10) requesting the service e.g. as a result of the user pressing a PoC button on his/her equipment such as a telephone.

This action prompts the issue of a so-called UDP:RTCP:App Floor Request (this designation and its meaning are well known to those of skill in the art thus making it unnecessary to provide a more detailed description herein) which, in a step 102, is conveyed to the server 14 via the RAN 16.

Upon receipt of the request, the server 14 issues two messages, namely:
- in a step 104, a UDP:RTCP:App Floor Taken message is sent over the RAN 18 towards the UE 12, and
- in a step 106, a UDP:RTCP:App Floor Grant message is sent over the RAN 16 towards the UE 10.

As a result of receiving the UDP:RTCP:App Floor Taken message, the UE 12 issues, in a step 108, a Talker ID Notification.

Similarly, as a result of receiving the UDP:RTCP:App Floor Grant message, the UE 10 issues, in a step 110, a Talk Proceed Notification.

Again, the designations and meanings of the messages referred to in the foregoing are well known to those of skill in the art and make it unnecessary to provide a more detailed description herein.

At this point the system proceed with Radio Resource allocation which takes place in an asymmetric way as schematically shown in the bottom position of the figure where larger arrows designate data transfer from the UE 10 to the UE 12, while smaller arrows designate signalling traffic taking place (over a smaller bandwidth) in the opposite direction.

Such an asymmetric Radio Resource allocation over the RANs 16 and 18 is made possible by the two User Equipments 10 and 12 sending, in steps 112 and 114, respective uplink messages including a flag designated UDT (User Data Transfer) .

In the case of the UE 10 (here acting as the "transmitter" of the user data traffic) the flag is set to "1", thus causing the radio resources (e.g. bandwidth) over the RAN 16 to be allocated - asymmetrically - in such a way to carry the user data being transmitted from the UE 10, while permitting e.g. signalling data to flow over a reduced bandwidth in the opposite direction.

In the case of the UE 12 (here acting as the "receiver" of the user data traffic) the flag is set to "0", thus causing the radio resources (e.g. bandwidth) over the RAN 18 to be allocated - again asymmetrically - in such a way to carry the user data being forwarded to the UE 12, while again permitting e.g. signalling data to flow over a reduced bandwidth in the opposite direction.

In brief, in the exemplary embodiment shown, the equipments 10 and 12 transmit radio link control signals including (see the steps 112 and 114) a signalling flag UDT, which is set either to "1" or "0" and is thus indicative of whether the equipment is sending (as is the case of UE 10) user plane data over a link in the network. The radio resources are thus allocated asymmetrically in the directions from and towards said the equipments 10 and 12, respectively. Those of skill the art will promptly appreciate that, while in the exemplary embodiment shown herein the UDT flags are sent in the form of "uplink" messages from the user equipments UE 10, 12 towards the networks 16 and 18, the same approach could be notionally applied e.g. by causing equivalent flags to be sent "downlink" from the PoC server 14 towards the networks 16 and 18 once the server 14 receives the message sent in the step 102.

Consequently, without prejudice to the underlying principles of the invention, the details and the embodiments may vary, even appreciably, with reference to what has been described by way of example only, without departing from the scope of the invention as defined by the annexed claims.

## Claims

1. A method of managing radio resources in a communication network (16, 18) including equipment (10, 12) configured for transferring user plane data over radio links in said network (16, 18), the method including the step of transmitting radio link control signals including a signalling flag (UDT) indicative of whether the equipment (10, 12) is sending user plane data over a link in said network, whereby radio resources of said link are allocated asymmetrically in the directions from and towards said equipment (10, 12), respectively.

2. The method of claim 1, **characterized in that** it includes the step of said equipment (10, 12) transmitting said signalling flag (UDT) indicative of whether the equipment (10, 12) is sending user plane data as an uplink message (112, 144) towards the network (16, 18).

3. The method of either of claims 1 or 2, **characterized in that** it includes the step of allocating asymmetrically the radio resources of said link by granting a larger bandwidth in the direction of said user plane data transfer in comparison to the opposite direction.

4. A system for radio resource management in a communication network (16, 18) including equipment (10, 12) configured for transferring user plane data over radio links in said network (16, 18), the system being configured (10, 12) for transmitting radio link control signals including a signalling flag (UDT) indicative of whether the equipment (10, 12) is sending user plane data over a link in said network, whereby radio resources of said link are allocated asymmetrically in the directions from and towards said equipment (10, 12), respectively.

5. The system of claim 4, **characterized in that** it includes user equipment (10, 12) configured for transmitting said signalling flag (UDT) indicative of whether the equipment (10, 12) is sending user plane data as an uplink message (112, 144) towards the network (16, 18).

6. The system of either of claims 4 or 5, **characterized in that** said network (16, 18) is configured for allocating asymmetrically the radio resources of said link by granting a larger bandwidth in the direction of said user plane data transfer in comparison to the opposite direction.

7. A communication network including the system of any of claims 4 to 6.

8. The network of claim 7, **characterized in that** said network includes links supporting half duplex Packet Switch (PS) services, such as PoC (Push to Talk Over Cellular) and VoIP (Voice over IP).

9. The network of either of claims 7 or 8, **characterized in that** said network is a GERAN/UTRAN network.

10. A computer program product loadable in the memory of at least one computer and including software code portions for performing the method of any of claims 1 to 3.
